# EUROPÄISCHE PATENTSCHRIFT

(11) **EP 3 812 341 B1**
(45) Veröffentlichungstag und Bekanntmachung des Hinweises auf die Patenterteilung: **04.06.2025**
(21) Anmeldenummer: 20198027.3
(22) Anmeldetag: 24.09.2020
(51) Int. Cl.: B66F 9/075, B60K 15/07, B62D 49/08

(54) **GEGENGEWICHTSGABELSTAPLER**
COUNTERBALANCE FORK LIFT
CHARIOT ÉLÉVATEUR À FOURCHE À CONTREPOIDS

(30) Priorität: 15.10.2019 DE 102019127695
(43) Veröffentlichungstag der Anmeldung: 28.04.2021
(73) Patentinhaber: Linde Material Handling GmbH, 63743 Aschaffenburg (DE)
(72) Erfinder: KRETSCHMER, Daniel, 63825 Westerngrund (DE)
(74) Vertreter: Patentship Patentanwaltgesellschaft

(56) Entgegenhaltungen:
- DE-A1- 102004 032 169
- DE-A1- 19 531 750
- JP-A- 2001 063 981
- JP-A- 2001 163 593
- JP-A- H1 053 033

## Beschreibung

Die Erfindung betrifft einen Gegengewichtsgabelstapler mit einem Fahrzeugrahmen und einem Gegengewicht und einem als Treibgasmotor ausgebildeten Verbrennungsmotor, wobei vertikal oberhalb des Gegengewichts eine Treibgasflaschenkonsole zur Aufnahme und Befestigung einer Treibgasflasche angeordnet ist.

Bei Gegengewichtsgabelstaplern mit einem als Treibgasmotor ausgebildeten Verbrennungsmotor ist es bekannt, als Treibstoffspeicher vertikal oberhalb des Gegengewichts eine oder mehrere Treibgasflaschen anzuordnen.

Falls die Treibgasflasche(n) leer sind, müssen die leeren Treibgasflasche(n) gegen volle Treibgasflasche(n) gewechselt werden. Dazu muss die leere Treibgasflasche von einer Bedienperson aus der Treibgasflaschenkonsole entnommen und somit entladen werden. Anschließend kann von der Bedienperson die Treibgasflaschenkonsole mit einer vollen Treibgasflasche beladen werden. Bei entsprechender Größe des Flurförderzeugs kann es hierbei vorkommen, dass die Bedienperson beim Entladen und/oder Beladen der Treibgasflaschenkonsole die Treibgasflasche auf das Gegengewicht ablegt und/oder auf dem Gegengewicht schiebt, um die Treibgasflaschenkonsole leichter von der Treibgasflasche entladen bzw. mit der Treibgasflasche beladen zu können. Dies kann jedoch zu Beschädigungen des Gegengewichts führen, beispielsweise indem das Gegengewicht beim Entladen und Beladen der Treibgasflasche und somit beim Wechsel der Treibgasflasche verkratzt wird.

Aus der DE 10 2004 032 169 A1 ist ein gattungsgemäßer Gegengewichtsgabelstapler mit den Merkmalen des Oberbegriffs des Patentanspruchs 1 bekannt. Eine Treibgasflaschenhalterung weist eine aus mehreren Schlitten bestehende Linearführung, ein Schwenklager und eine doppelschalenförmige Flaschenaufnahme auf. Die doppelschalenförmige Flachenaufnahme kann für den Wechsel der Treibgasflasche mittels der Linearführung nach hinten geschoben werden und mittels des Schwenklagers nach unten geschwenkt werden.

Die DE 195 31 750 A1 offenbart einen Gegengewichtsgabelstapler, bei dem die Treibgasflasche in einer Treibgasflaschenkonsole aufgenommen und befestigt ist, die von einer Platte, Seitenhalterungsrahmen der Platte und Band- oder Schellenvorrichtungen an den Seitenhalterungsrahmen gebildet ist. Die Platte der Treibgasflaschenkonsole ist als bewegliche Platte ausgeführt, die mittels einer Linearführung an einer am Gegengewicht befestigten, feststehenden Platte in Fahrzeuglängsrichtung verschoben werden kann.

Aus der JP 2001-063981 A1 offenbart eine Treibgasflaschenkonsole, in der eine Treibgasflasche aufgenommen ist. Die Treibgasflaschenkonsole ist mittels Bolzen derart in Führungsschienen geführt, dass die Treibgasflaschenkonsole mitsamt der darin befindlichen Treibgasflasche für den Wechsel der Treibgasflasche nach hinten und gleichzeitig nach unten verschwenkt werden kann.

Die JP H10-53033 A offenbart einen Gegengewichtsgabelstapler mit einer Treibgasflaschenkonsole, in der eine Treibgasflasche aufgenommen ist. Die Treibgasflaschenkonsole ist um eine geneigte Achse verschwenkbar, um für den Wechsel der Treibgasflasche die Treibgasflasche zur Seite und nach unten zu verschwenken.

Die JP 2001-163593 A offenbart bei einem Gegengewichtsgabelstapler die Anordnung einer Treibgasflaschenkonsole am hinteren oberen Bereich des Fahrerschutzdaches, mit der die Sichtbehinderung einer auf dem Gegengewicht angeordneten Treibgasflasche vermieden werden können.

Der vorliegenden Erfindung liegt die Aufgabe zugrunde, ein Flurförderzeug der eingangs genannten Gattung zur Verfügung zu stellen, bei dem das Gegengewicht auf einfache Weise beim Wechsel der Treibgasflasche vor Beschädigungen geschützt ist.

Diese Aufgabe wird erfindungsgemäß dadurch gelöst, dass in Fahrzeuglängsrichtung benachbart zur Treibgasflaschenkonsole oberhalb des Gegengewichts eine sich in Richtung zum Fahrzeugheck erstreckende, mit einer Ablagemulde versehene Ablagevorrichtung angeordnet ist, die eine Ablage der Treibgasflasche ermöglicht, wobei die Ablagevorrichtung von zwei in Fahrzeugquerrichtung beabstandet angeordneten und sich in Fahrzeuglängsrichtung erstreckenden Ablageschienen gebildet ist, wobei die Ablageschienen in Fahrzeuglängsrichtung zwischen der Treibgasflaschenkonsole und Endanschlägen als die Ablagemulde ausgebildet sind.

Erfindungsgemäß ist in Fahrzeuglängsrichtung benachbart und somit angrenzend zur Treibgasflaschenkonsole oberhalb des Gegengewichts eine Ablagevorrichtung angeordnet, die sich in Richtung zum Fahrzeugheck erstreckt und die eine Ablage der Treibgasflasche beim Beladen sowie beim Entladen der Treibgasflasche ermöglicht. Die Ablagevorrichtung ermöglicht es somit, dass eine Bedienperson beim Wechsel einer leeren Treibgasflasche die leere Treibgasflasche von der Treibgasflaschenkonsole auf die Ablagevorrichtung rollen bzw. ziehen kann und anschließend in ergonomisch günstiger Weise von der Ablagevorrichtung hochheben kann. Eine volle Treibgasflasche kann entsprechend von einer Bedienperson in ergonomisch günstiger Weise auf die Ablagevorrichtung abgelegt werden und anschließend von der Ablagevorrichtung in die Treibgasflaschenkonsole gerollt bzw. geschoben werden. Mit der Ablagevorrichtung können somit Beschädigungen des Gegengewichts, beispielsweise ein Verkratzen des Gegengewichts, beim Entladen und Beladen der Treibgasflaschen wirkungsvoll vermieden werden. Zudem ermöglicht die Ablagevorrichtung ein vereinfachtes und ergonomisches Handling der Treibgasflaschen beim Laden und Entladen der Treibgasflaschenkonsole und somit einen vereinfachten und ergonomischen Wechsel der Treibgasflaschen.

Gemäß einer vorteilhaften Ausführungsform der Erfindung ist die Ablagevorrichtung an der Treibgasflaschenkonsole befestigt. Die Ablagevorrichtung ist somit in die Treibgasflaschenkonsole baulich integriert. Dies ermöglicht einen einfachen und kostengünstigen Aufbau sowie eine einfache Montage der mit der Ablagevorrichtung versehenen Treibgasflaschenkonsole an dem Gegengewichtsgabelstapler.

Die Treibgasflaschenkonsole ist gemäß einer vorteilhaften Ausführungsform der Erfindung zwischen zwei in Fahrzeugquerrichtung beabstandet angeordneten vertikalen Tragsäulen eines Fahrerarbeitsplatzrahmens angeordnet. Durch den Einbau der Treibgasflaschenkonsole zwischen zwei in Fahrzeugquerrichtung beabstandet angeordneten vertikalen Tragsäulen des Fahrerarbeitsplatzrahmens kann die Treibgasflasche nicht seitlich zu einer Fahrzeugseite entnommen werden, sondern nur nach hinten in Richtung zum Fahrzeugheck. Die Ablagevorrichtung verhindert hierbei auf einfache Weise, dass das Gegengewicht durch die Treibgasflaschen bei deren Austausch beschädigt werden kann und führt zu einem einfachen und ergonomischen Handling der Treibgasflaschen bei deren Austausch.

Gemäß einer vorteilhaften Ausgestaltungsform der Erfindung weist die Ablagevorrichtung an einem der Treibgasflaschenkonsole gegenüberliegenden Endbereich die nach vertikal oben weisende Endanschläge auf. Die Endanschläge verhindern auf einfache Weise, dass eine leere Treibgasflasche beim Herausrollen bzw. Herausziehen aus der Treibgasflaschenkonsole von der Ablagevorrichtung auf das Gegengewicht rollen kann. Zudem erleichtern die Endanschläge das Ablegen einer vollen Treibgasflasche auf der Ablagevorrichtung und verhindern, dass die volle Treibgasflasche nach dem Ablegen auf der Ablagevorrichtung von dieser auf das Gegengewicht rollen kann.

Die Endanschläge sind gemäß einer vorteilhaften Ausgestaltungsform der Erfindung von einem nach oben abgewinkelten Endabschnitt der Ablagevorrichtung gebildet. Dies ermöglicht eine einfache und günstige Herstellung der Endanschläge an der Ablagevorrichtung.

Gemäß der Erfindung ist die Ablagevorrichtung von zwei in Fahrzeugquerrichtung beabstandet angeordneten und sich in Fahrzeuglängsrichtung erstreckenden Ablageschienen gebildet. Zwei derartige Ablageschienen ermöglichen einen einfachen und günstigen Aufbau der Ablagevorrichtung. Die Ablageschienen sind bevorzugt als Gleitschienen ausgebildet, auf denen die Treibgasflaschen leicht gerollt bzw. geschoben oder gezogen werden kann.

Mit besonderem Vorteil sind gemäß der Erfindung die Ablageschienen in Fahrzeuglängsrichtung zwischen der Treibgasflaschenkonsole und den Endanschlägen als die Ablagemulde ausgebildet. Dies ermöglicht ein besonderes einfaches und ergonomisches Handling der Treibgasflaschen bei deren Wechsel, da eine leere Treibgasflasche beim Herausrollen aus der Treibgasflaschenkonsole sicher in der Ablagemulde der Ablageschienen zum Liegen kommt sowie eine volle Treibgasflasche nach dem Ablegen auf den Ablageschienen sicher in der Ablagemulde der Ablageschienen zum Liegen kommt.

Gemäß einer vorteilhaften Weiterbildung der Erfindung ist an den Ablageschienen im Bereich der Ablagemulde ein Auflageblech zur Aufnahme und Befestigung einer weiteren Treibgasflasche befestigbar. Dadurch kann auf sehr einfache Weise eine zweite Treibgasflasche im Betrieb des Flurförderzeugs als Treibstoffspeicher mitgeführt werden.

Die Ablageschienen sind hierbei vorteilhafterweise mit Befestigungslöchern, insbesondere jeweils einem Langloch, versehen, in denen das Auflageblech fixierende Befestigungsschrauben aufnehmbar sind. Dadurch kann in einfacher und kostengünstiger Weise an den beiden Ablageschienen das Auflageblech befestigt werden, auf dem eine zweite Treibgasflasche abgelegt und befestigt werden kann.

Weitere Vorteile und Einzelheiten der Erfindung werden anhand der in den schematischen Figuren dargestellten Ausführungsbeispiele näher erläutert. Hierbei zeigt
- Figur 1: einen erfindungsgemäßen Gegengewichtsgabelstapler in einer Seitenansicht,
- Figur 2: eine perspektivische Ansicht des Gegengewichtsgabelstaplers von hinten und
- Figur 3: eine Weiterbildung der Figur 2.

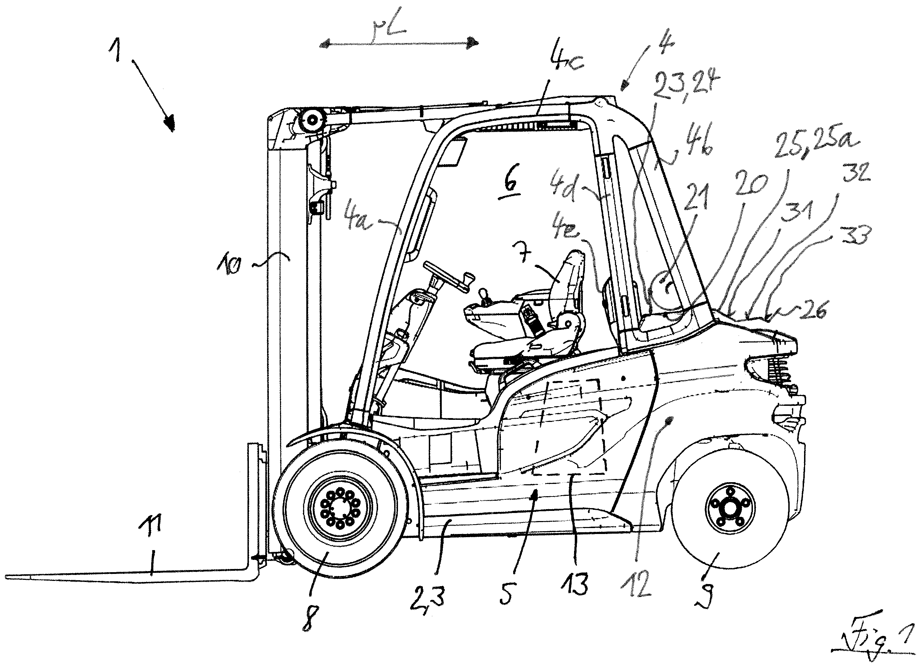

In der Figur 1 ist ein erfindungsgemäßer Gegengewichtsgabelstapler 1 in einer Seitenansicht dargestellt.

Der Gegengewichtsgabelstapler 1 weist einen Fahrzeugkörper 2 auf, der einen Fahrzeugrahmen 3 umfasst. Unterhalb eines Fahrerarbeitsplatzrahmens 4, beispielsweise eines Fahrerschutzdachrahmens, ist ein Aggregateraum 5 vorgesehen. Innerhalb des Fahrerarbeitsplatzrahmens 4 ist ein Fahrerarbeitsplatz 6 mit einem Fahrersitz 7 ausgebildet.

Im lastzugewandten frontseitigen Bereich ist der Gegengewichtsgabelstapler 1 mit zwei Antriebsrädern 8 und im lastabgewandten heckseitigen Bereich mit gelenkten Rädern 9 versehen ist. Am frontseitigen lastzugewandten Bereich des Flurförderzeugs 1 ist ein Hubgerüst 10 angeordnet, an dem ein als Lastgabel ausgebildetes Lastaufnahmemittel 11 auf- und abbewegbar angeordnet ist. Im lastabgewandten Bereich ist das Flurförderzeug 1 mit einem Gegengewicht 12 versehen, das das Fahrzeugheck bildet.

Der Fahrerarbeitsplatzrahmen 4 weist zwei in Fahrzeugquerrichtung beabstandet angeordnete vordere vertikale Tragsäulen 4a und zwei in Fahrzeugquerrichtung beabstandet angeordnete hintere vertikale Tragsäulen 4b auf, die ein Fahrerschutzdach 4c tragen. Weiterhin können noch zwei in Fahrzeugquerrichtung beabstandet angeordnete mittlere vertikale Tragsäulen 4d vorgesehen sein. Im unteren Bereich der beiden Tragsäulen 4d ist zwischen den beiden Tragsäulen 4d eine hinter dem Fahrersitz 7 angeordnete Rückwand 4e angeordnet.

Der Gegengewichtsgabelstapler 1 ist mit einem verbrennungsmotorischen Antriebssystem ausgerüstet, wobei in dem Aggregateraum 4 ein als Treibgasmotor ausgebildeter Verbrennungsmotor 13 angeordnet ist.

Vertikal oberhalb des Gegengewichts 12 ist eine Treibgasflaschenkonsole 20 angeordnet, auf der eine Treibgasflasche 21 aufgenommen und befestigt werden kann. Die Treibgasflasche 21 bildet den Treibstoffspeicher des Verbrennungsmotors 13.

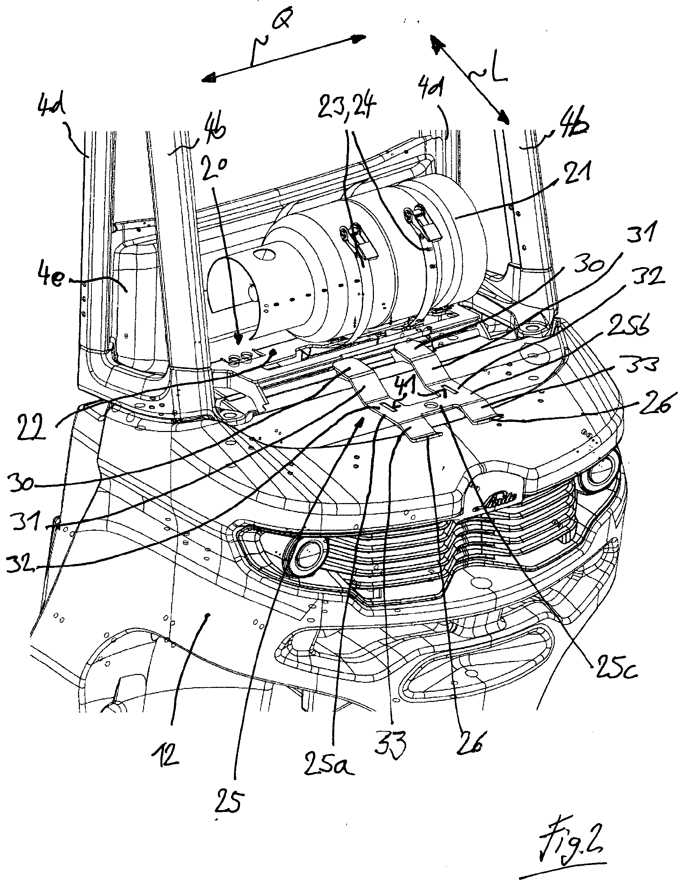

Die Treibgasflaschenkonsole 20 umfasst - wie in Verbindung mit der Figur 2 ersichtlich ist - ein Aufnahmeblech 22, auf dem die Treibgasflasche 21 abgelegt werden kann. Zur Befestigung der Treibgasflasche 21 an der Treibgasflaschenkonsole 20 sind entsprechende Befestigungsmittel 23 vorgesehen. Im dargestellten Ausführungsbeispiel sind die Befestigungsmittel 23 von zwei Spannbändern 24 gebildet.

Die Treibgasflaschenkonsole 20 ist bei dem erfindungsgemäßen Gegengewichtsgabelstapler 1 zwischen den zwei hinteren vertikalen Tragsäulen 4b des Fahrerarbeitsplatzrahmens 4 angeordnet, so dass die Treibgasflasche 21 zwischen den beiden Tragsäulen 4b angeordnet ist.

Wie weiterhin in Verbindung mit der Figur 2 ersichtlich ist, ist in Fahrzeuglängsrichtung L benachbart und angrenzend zur Treibgasflaschenkonsole 20 an der Oberseite des Gegengewichts 12 und somit oberhalb des Gegengewichts 12 eine sich in Richtung zum Fahrzeugheck erstreckende Ablagevorrichtung 25 angeordnet, die eine Ablage der Treibgasflasche 21 bei deren Beladen und Entladen ermöglicht.

Die Ablagevorrichtung 25 ist im dargestellten Ausführungsbeispiel an der Treibgasflaschenkonsole 20 befestigt, so dass die Ablagevorrichtung 25 baulich in die Treibgasflaschenkonsole 20 integriert ist.

Die Ablagevorrichtung 25 weist an einem der Treibgasflaschenkonsole 20 gegenüberliegenden Endbereich nach vertikal oben weisende Endanschläge 26 auf. Die Endanschläge 26 sind im dargestellten Ausführungsbeispiel von einem nach oben abgewinkelten Endabschnitt der Ablagevorrichtung 25 gebildet.

Wie aus der Figur 2 ersichtlich ist, ist im dargestellten Ausführungsbeispiel die Ablagevorrichtung 25 von zwei in Fahrzeugquerrichtung Q beabstandet angeordneten und sich in Fahrzeuglängsrichtung L erstreckenden Ablageschienen 25a, 25b gebildet, die sich von der Treibgasflaschenkonsole 20 in Richtung zu dem Fahrzeugheck erstrecken und oberhalb des Gegengewichts 12 angeordnet sind. Die beiden Ablageschienen 25a, 25b sind mit dem vorderen Endbereich an der Treibgasflaschenkonsole 20 befestigt und erstrecken sich von der Treibgasflaschenkonsole 20 freitragend nach hinten über das Gegengewicht 12 in Richtung zu dem Fahrzeugheck.

Im hinteren Bereich sind die beiden Ablageschienen 25a, 25b mit einem Querträger 25 miteinander verbunden.

Die Ablageschienen 25a, 25b weisen im dargestellten Ausführungsbeispiel im vorderen Bereich jeweils einen horizontalen Abschnitt 30 auf, an den sich ein nach schräg unten verlaufender Abschnitt 31 anschließt. An den Abschnitt 31 schließt sich ein schräg nach oben verlaufender Abschnitt 32 an. Die Abschnitte 31 und 32 bilden eine Ablagemulde für die Treibgasflasche 21. An den Abschnitt 32 schließt sich ein nach schräg unten verlaufender Abschnitt 33 an, der am Ende mit dem nach oben abgewinkelten Endabschnitt den entsprechenden Endanschlag 26 bildet.

Sofern bei dem Gegengewichtsgabelstapler 1 der Figuren 1 und 2 eine leere Treibgasflasche 21 gegen eine volle Treibgasflachse 21 gewechselt werden muss, kann eine Bedienperson beim Wechsel einer leeren Treibgasflasche 21 die leere Treibgasflasche 21 von der Treibgasflaschenkonsole 20 auf den beiden Ablageschienen 25a, 25b, die die Funktion von Gleitschienen für die Treibgasflasche 21 aufweisen, in Richtung zum Fahrzeugheck rollen bzw. ziehen und anschließend in ergonomisch günstiger Weise von der Ablageschienen 25a, 25b heben. Die Treibgasflasche 21 kommt hierbei in der von den Abschnitten 31, 32 gebildeten Ablagemulde zum Liegen. Die Endanschläge 26 verhindern, dass die leere Treibgasflasche 21 auf das Gegengewicht 12 rollen kann und dieses beschädigen kann. Anschließend kann die Bedienperson eine volle Treibgasflasche 21 in ergonomisch günstiger Weise auf die beiden Ablageschienen 25a, 25b ablegen. Die volle Treibgasflasche 21 kommt hierbei wiederum in der von den Abschnitten 31, 32 gebildeten Ablagemulde zum Liegen. Die Endanschläge 26 verhindern, dass die volle Treibgasflasche 21 auf das Gegengewicht 12 rollen kann und dieses beschädigen kann. Anschließend kann die Bedienperson die volle Treibgasflachse 21 auf den beiden Ablageschienen 25a, 25b, die die Funktion von Gleitschienen für die Treibgasflasche 21 aufweisen, in die Treibgasflaschenkonsole 20 rollen bzw. schieben. Mit der von den beidem Ablageschienen 25a, 25b gebildeten Ablagevorrichtung 25, die oberhalb des Gegengewichts 12 angeordnet ist, kann das Gegengewicht 12 in einfacher und sicherer Weise vor Beschädigungen, beispielsweise einem Verkratzen des Gegengewichts 12, beim Entladen und Beladen der Treibgasflaschen 21 geschützt werden. Zudem ermöglicht die Ablagevorrichtung 25 ein vereinfachtes und ergonomisches Handling der Treibgasflaschen 21 beim Laden und Entladen der Treibgasflaschenkonsole 20.

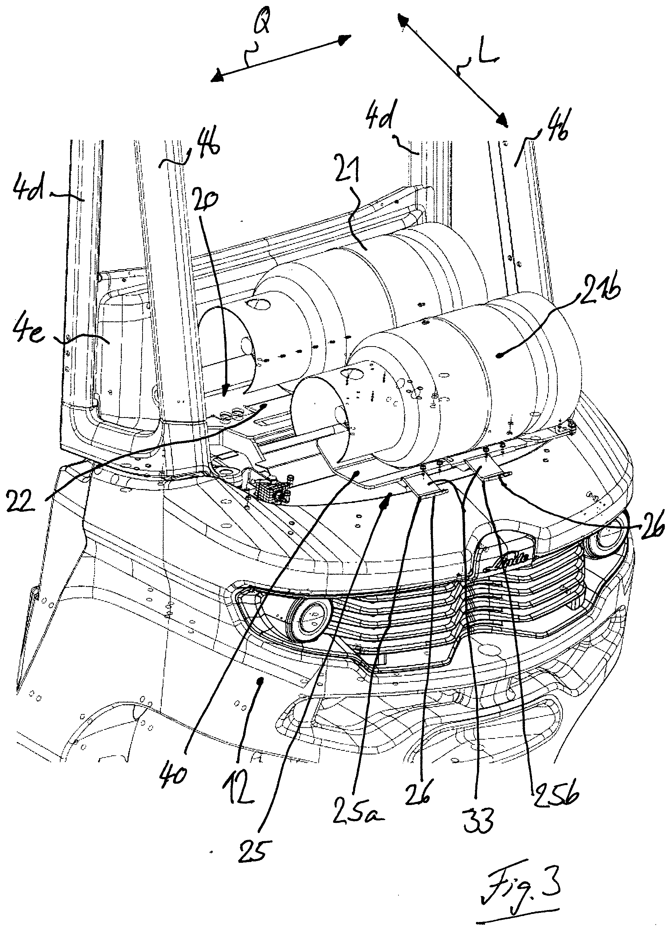

In der Figur 3 ist eine Weiterbildung der Erfindung dargestellt.

In der Figur 3 ist an den beiden Ablageschienen 25a, 25b im Bereich der von den Abschnitten 31, 32 gebildeten Ablagemulde ein Auflageblech 40 zur Aufnahme und Befestigung einer weiteren Treibgasflasche 21b befestigt, so dass als Treibstoffspeicher des Verbrennungsmotors 13 zwei Treibgasflaschen 21, 21b vorhanden sind. Die Treibgasflasche 21b ist hierbei in Fahrzeuglängsrichtung L hinter der Treibgasflasche 21 angeordnet.

Zur Befestigung der Treibgasflasche 21b an dem Auflageblech 40 sind entsprechende nicht näher dargestellte Befestigungsmittel vorgesehen. Die Befestigungsmittel können von zwei Spannbändern gebildet sein.

Die Ablageschienen 25a, 25b sind hierzu bevorzugt mit Befestigungslöchern 41, insbesondere jeweils einem Langloch, (Figur 2) versehen, in denen das Auflageblech 40 fixierende, nicht näher dargestellte Befestigungsschrauben aufnehmbar sind.

## Patentansprüche

1. Gegengewichtsgabelstapler (1) mit einem Fahrzeugrahmen (3) und einem Gegengewicht (12) und einem als Treibgasmotor ausgebildeten Verbrennungsmotor (13), wobei vertikal oberhalb des Gegengewichts (12) eine Treibgasflaschenkonsole (20) zur Aufnahme und Befestigung einer Treibgasflasche (21) angeordnet ist, **dadurch gekennzeichnet, dass** in Fahrzeuglängsrichtung (L) benachbart zur Treibgasflaschenkonsole (20) oberhalb des Gegengewichts (12) eine sich in Richtung zum Fahrzeugheck erstreckende, mit einer Ablagemulde versehene Ablagevorrichtung (25) angeordnet ist, die eine Ablage der Treibgasflasche (21) ermöglicht, wobei die Ablagevorrichtung (25) von zwei in Fahrzeugquerrichtung (Q) beabstandet angeordneten und sich in Fahrzeuglängsrichtung (L) erstreckenden Ablageschienen (25a, 25b) gebildet ist, wobei die Ablageschienen (25a, 25b) in Fahrzeuglängsrichtung (L) zwischen der Treibgasflaschenkonsole (20) und Endanschlägen (26) als die Ablagemulde ausgebildet sind.

2. Gegengewichtsgabelstapler nach Anspruch 1, **dadurch gekennzeichnet, dass** die Ablagevorrichtung (25) an der Treibgasflaschenkonsole (20) befestigt ist.

3. Gegengewichtsgabelstapler nach Anspruch 1 oder 2, **dadurch gekennzeichnet, dass** die Treibgasflaschenkonsole (20) zwischen zwei in Fahrzeugquerrichtung (Q) beabstandet angeordneten vertikalen Tragsäulen (4b) eines Fahrerarbeitsplatzrahmens (4) angeordnet ist.

4. Gegengewichtsgabelstapler nach einem der Ansprüche 1 bis 3, **dadurch gekennzeichnet, dass** die Ablagevorrichtung (25) an einem der Treibgasflaschenkonsole (20) gegenüberliegenden Endbereich die nach vertikal oben weisende Endanschläge (26) aufweist.

5. Gegengewichtsgabelstapler nach Anspruch 4, **dadurch gekennzeichnet, dass** die Endanschläge (26) von einem nach oben abgewinkelten Endabschnitt der Ablagevorrichtung (25) gebildet ist.

6. Gegengewichtsgabelstapler nach einem der Ansprüche 1 bis 5, **dadurch gekennzeichnet, dass** an den Ablageschienen (25a, 25b) im Bereich der Ablagemulde ein Auflageblech (40) zur Aufnahme und Befestigung einer weiteren Treibgasflasche (21b) befestigbar ist.

7. Gegengewichtsgabelstapler nach Anspruch 6, **dadurch gekennzeichnet, dass** die Ablageschienen (25a, 25b) mit Befestigungslöchern (41), insbesondere jeweils einem Langloch, versehen sind, in denen das Auflageblech (40) fixierende Befestigungsschrauben aufnehmbar sind.

## Claims

1. Counterbalanced forklift truck (1) with a vehicle frame (3) and a counterweight (12) and a combustion engine (13) designed as an LPG engine, wherein an LPG cylinder bracket (20) is arranged vertically above the counterweight (12) for receiving and fixing an LPG cylinder (21), **characterized in that** a storage device (25), provided with a storage recess, is arranged extending in the direction of the rear of the vehicle in the longitudinal direction of the vehicle (L) adjacently with respect to the LPG cylinder bracket (20) above the counterweight (12), which storage device allows the LPG cylinder (21) to be deposited, wherein the storage device (25) is formed from two storage rails (25a, 25b) arranged spaced apart in the transverse direction of the vehicle (Q) and extending in the longitudinal direction of the vehicle (L), wherein the storage rails (25a, 25b) are formed as the storage recess in the longitudinal direction of the vehicle (L) between the LPG cylinder bracket (20) and end stops (26).

2. Counterbalanced forklift truck according to Claim 1, **characterized in that** the storage device (25) is fastened to the LPG cylinder bracket (20).

3. Counterbalanced forklift truck according to Claim 1 or 2, **characterized in that** the LPG cylinder bracket (20) is arranged between two vertical support columns (4b) of a driver's workplace frame (4) arranged spaced apart in the transverse direction of the vehicle (Q).

4. Counterbalanced forklift truck according to one of Claims 1 to 3, **characterized in that** the storage device (25) has the vertically upwardly pointing end stops (26) on an end region lying opposite the LPG cylinder bracket (20).

5. Counterbalanced forklift truck according to Claim 4, **characterized in that** the end stops (26) are formed from an upwardly angled-away end portion of the storage device (25).

6. Counterbalanced forklift truck according to one of Claims 1 to 5, **characterized in that** a support plate (40) for receiving and fixing a further LPG cylinder (21b) can be fastened to the storage rails (25a, 25b) in the area of the storage recess.

7. Counterbalanced forklift truck according to Claim 6, **characterized in that** the storage rails (25a, 25b) are provided with fastening holes (41), in particular in each case a slot, in which fixing screws fixing the support plate (40) can be received.

## Revendications

1. Chariot élévateur à fourche à contrepoids (1), comprenant un châssis de véhicule (3) et un contrepoids (12) et un moteur thermique (13) réalisé sous forme de moteur à gaz, dans lequel une console de bouteille à gaz propulseur (20) pour recevoir et fixer une bouteille à gaz propulseur (21) est disposée verticalement au-dessus du contrepoids (12), **caractérisé en ce qu'**un dispositif de stockage (25) pourvu d'un creux de stockage, s'étendant en direction de l'arrière du véhicule et permettant de ranger la bouteille à gaz propulseur (21) est disposé dans la direction longitudinale du véhicule (L) de manière adjacente à la console de bouteille à gaz propulseur (20) au-dessus du contrepoids (12), dans lequel le dispositif de stockage (25) est formé par deux rails de stockage (25a, 25b) disposés de manière espacée dans la direction transversale du véhicule (Q) et s'étendant dans la direction longitudinale du véhicule (L), dans lequel les rails de stockage (25a, 25b) sont réalisés dans la direction longitudinale du véhicule (L) entre la console de bouteille à gaz propulseur (20) et des butées d'extrémité (26) en tant que creux de stockage.

2. Chariot élévateur à fourche à contrepoids selon la revendication 1, **caractérisé en ce que** le dispositif de stockage (25) est fixé à la console de bouteille à gaz propulseur (20).

3. Chariot élévateur à fourche à contrepoids selon la revendication 1 ou 2, **caractérisé en ce que** la console de bouteille à gaz propulseur (20) est disposée entre deux colonnes porteuses verticales (4b) d'un cadre de poste de travail de conducteur (4), disposées de manière espacée dans la direction transversale du véhicule (Q).

4. Chariot élévateur à fourche à contrepoids selon l'une quelconque des revendications 1 à 3, **caractérisé en ce que** le dispositif de stockage (25) présente dans une zone d'extrémité opposée à la console de bouteille à gaz propulseur (20) les butées d'extrémité (26) tournées verticalement vers le haut.

5. Chariot élévateur à fourche à contrepoids selon la revendication 4, **caractérisé en ce que** les butées d'extrémité (26) sont formées par une partie d'extrémité, coudée vers le haut, du dispositif de stockage (25).

6. Chariot élévateur à fourche à contrepoids selon l'une quelconque des revendications 1 à 5, **caractérisé en ce qu'**une tôle de support (40) pour recevoir et fixer une bouteille à gaz propulseur supplémentaire (21b) peut être fixée aux rails de stockage (25a, 25b) dans la zone du creux de stockage.

7. Chariot élévateur à fourche à contrepoids selon la revendication 6, **caractérisé en ce que** les rails de stockage (25a, 25b) sont pourvus de trous de fixation (41), en particulier respectivement d'un trou oblong, dans lesquels des vis de fixation fixant la tôle de support (40) peuvent être reçues.
